Europäisches Patentamt

European Patent Office

Office européen des brevets

(19)

(11) **EP 0 729 283 A1**

(12) # DEMANDE DE BREVET EUROPEEN

(43) Date de publication:
28.08.1996 Bulletin 1996/35

(51) Int Cl.6: **H04Q 7/24**

(21) Numéro de dépôt: 96400341.2

(22) Date de dépôt: 19.02.1996

(84) Etats contractants désignés:
**DE GB NL SE**

(30) Priorité: **21.02.1995 FR 9501975**

(71) Demandeur: **FRANCE TELECOM**
**75015 Paris (FR)**

(72) Inventeurs:
• **Desseignes, Christophe**
**75012 Paris (FR)**

• **Despres, François**
**91570 Bievres (FR)**

(74) Mandataire: **Dubois-Chabert, Guy et al**
**Société de Protection des Inventions**
**25, rue de Ponthieu**
**75008 Paris (FR)**

(54) **Procédé de communication dans un système de radiocommunication avec des terminaux mobiles, utilisant la norme d'interface radio CAI-CT2**

(57) La présente invention concerne un procédé de communication dans un système de radiocommunication avec des terminaux mobiles en liaison avec au moins une borne fixe, utilisant la norme d'interface radio CAI-CT2, dans lequel lors de l'établissement d'une communication entre une borne (10) et un terminal mobile (15), la borne fournit au terminal mobile (15) une référence de lien radio qui est fonction de l'identité dudit terminal mobile (15). Cette référence de lien permet à une autre borne du réseau de distinguer une demande de "handover" d'une demande d'établissement de communication privée.

FIG. 2

## Description

Domaine technique

La présente invention concerne un procédé de communication, de type "handover", dans un système de radiocommunication avec des terminaux mobiles, utilisant la norme d'interface radio CAI-CT2.

Etat de la technique antérieure

La norme d'interface radio CAI-CT2 (I-ETS 300 131) spécifie le mécanisme de ré-établissement d'un lien radio borne-combiné, c'est-à-dire la possibilité pour un combiné de rétablir une communication avec une borne fixe, sur un canal radioélectrique, tout en restant sous cette même borne. Cette norme d'interface radio, dans la bande de fréquence 864,1-868,1 MHz, s'applique notamment au télépoint (par exemple Bi-Bop (marque déposée) qui permet d'émettre ou de recevoir des appels (sour réserve d'une localisation faite par l'abonné) dans la rue, au PABX (autocommutateur privé) et en application domestique (téléphone sans fil); cette bande de fréquence se divisant en 40 canaux accessibles dynamiquement, le duplex émission-réception utilisé étant temporel et le mode d'accès étant par répartition de fréquences.

Comme décrit dans les documents "Common Air Interface Specification I-ETS 300 131" et "MoU Recommended Test Methods for I-ETS 300 131 Compliant Cordless Portable Part", au niveau 2 du protocole CAI-CT2, c'est-à-dire au niveau de segmentation des messages du niveau 3 (ensemble des messages applicatifs), de protection de ces messages, et des messages de maintien de liaison (contrôle réciproque borne-combiné), des informations disponibles caractérisent la communication en cours, à savoir des mots PID, LID et BID utilisés dans la norme CAI-CT2. Le PID désigne l'identité du combiné. Le LID, qui est utilisé pour identifier spécifiquement une borne (on parle alors de BID), désigne un type de service ou une référence de lien radio.

Les LID sont alloués de la manière suivante :

- pour une valeur comprise entre 0000 et 03FF (hexadécimal) le LID correspond au type de service;
- pour une valeur comprise entre 0401 et FFFE, le LID correspond à une référence de lien combiné-borne, ou BID.

L'établissement d'une communication est différent selon la nature publique ou privée de l'appel.

Les messages échangés après établissement du niveau 2 sont:

- LINK_REQUEST (PID, LID = BID) pour un appel privé ;
- ou LINK_REQUEST (PID, LID = type de service) pour un appel public ;
- puis LINK_GRANT (PID, LID = référence de lien) où la référence de lien appartient à la plage de LID (0401-FFFE) et est attribuée par la borne:

  • soit de manière aléatoire,
  • soit de manière non répétitive,
  • soit de façon figée pour une borne de couverture donnée.

On distingue deux types de ré-établissement radio non synchronisé dans la norme CAI-CT2 :

**Le ré-établissement sur même canal : "Same Channel Re-establishment"**

Le ré-établissement radio sur le même canal a lieu dès lors que soit la borne, soit le combiné :

- reçoit le message de niveau 2 "Same Channel Re-establishment" ;
- détecte une perte de "handshake" (ou échange de messages entre combiné et borne permettant le maintien de la liaison) de trois secondes, puis envoie un message "Same Channel Re-establishment" ;
- détecte une perte de synchronisation, puis envoie un message "Same Channel Re-establishment" ;
- ne reçoit plus de mots de code valides durant un temps donné puis envoie le message "Same Channel Re-establishment".

  • Action niveau combiné : le combiné transmet LINK_REQUEST (PID, LID = référence de lien) sur le même canal pendant une période Tptxlr = 1,6 s (Tptxlr étant une temporisation définie dans la norme CAI-CT2). Après expiration de cette période Tptxlr, le combiné peut tenter un ré-établissement sur un autre canal.

  • Action niveau borne : la borne arrête de transmettre et attend un LINK_REQUEST (PID, LID = référence du lien) pendant Tfinor secondes (Tfinor étant une temporisation définie dans la norme CAI-CT2). Après expiration de cette temporisation, la borne scrute les 40 canaux.

**Le ré-établissement radio sur un canal différent de celui précédant une dégradation de communication**

  • Action niveau combiné : ce type de ré-établissement peut avoir lieu notamment dans les cas de figure suivants :

    - après échec d'un ré-établissement sur même canal, le combiné parcourt de nouveau la liste des canaux en quête d'une fréquence (ou ressource) libre ;
    - après la réception du message "Specified_Channel_Reestablishment", le combiné transmet LINK_REQUEST (PID, LID = référence de lien) sur un nouveau canal.

- Action niveau borne : ce type de ré-établissement peut avoir lieu notamment dans le cas d'échec de ré-établissement sur même canal. La borne scanne alors les 40 canaux, et attend un LINK_REQUEST (PID, LID = référence du lien) du combiné.

La norme CAI-CT2 présente l'inconvénient de ne pas permettre de distinguer au niveau 2 entre un ré-établissement de communication sur une autre borne et un début d'établissement d'appel privé (sans transmission d'informations entre les bornes).

L'invention a pour objet un procédé permettant à une borne utilisant la norme d'interface radio CAI-CT2 d'identifier un "handover" ou transfert automatique intercellulaire (passage d'une borne à une autre sans coupure pour le combiné) de la part d'un combiné et de pouvoir accepter alors le ré-établissement de la liaison.

## Exposé de l'invention

La présente invention propose donc un procédé de communication dans un système de radiocommunication avec des terminaux mobiles en liaison avec au moins une borne fixe, utilisant la norme d'interface radio CAI-CT2, caractérisé en ce que lors de l'établissement d'une communication entre une borne fixe et un terminal mobile, par exemple un combiné, la borne fixe fournit au terminal mobile une référence de lien radio qui est fonction de l'identité dudit terminal mobile.

Plus précisément la référence de lien radio est fonction de l'identité du combiné et d'une clé de calcul paramétrable. La référence du lien radio envoyé au terminal mobile d'identité PID est déterminée à partir du calcul BID = f(PID, K) avec LID $\in$ [0401, FFFE] ; f, qui est une fonction du logiciel borne ; K, qui est une clé de 16 bits (taille de BID), étant les mêmes dans chaque borne. La clé est changée pour l'ensemble du réseau de bornes n fois par jours ; avec n entier $\geq$ 2.

Ce procédé selon l'invention est extrêmement simple et permet de savoir si la demande de "handover" du combiné est licite sous une borne d'un réseau donné.

Avantageusement ce mécanisme peut également être vu comme un "filet de secours" d'un mécanisme de "handover" basé sur un transfert d'information entre une borne d'appel et les bornes voisines de celle-ci.

Avantageusement l'utilisation de plusieurs clés ou de plusieurs fonctions différentes permet de restreindre le service (géographiquement par exemple) ou de pouvoir "handover" (si les infrastructures réseaux l'autorisent) entre réseaux de bornes d'opérateurs différents.

Avantageusement le mot BID est constitué de deux parties: une première partie sur un (ou plusieurs) bit(s) déterminé(s) par la borne, de manière aléatoire ou de manière fixe, et une seconde partie sur les bits restants qui constituent la "moulinette" fonction du logiciel borne.

## Brève description des dessins

- La figure 1 illustre un système de radiocommunication avec des terminaux mobiles, utilisant la norme d'interface radio CAI-CT2 ;
- la figure 2 illustre le fonctionnement du procédé selon l'invention.

## Exposé détaillé de modes de réalisation

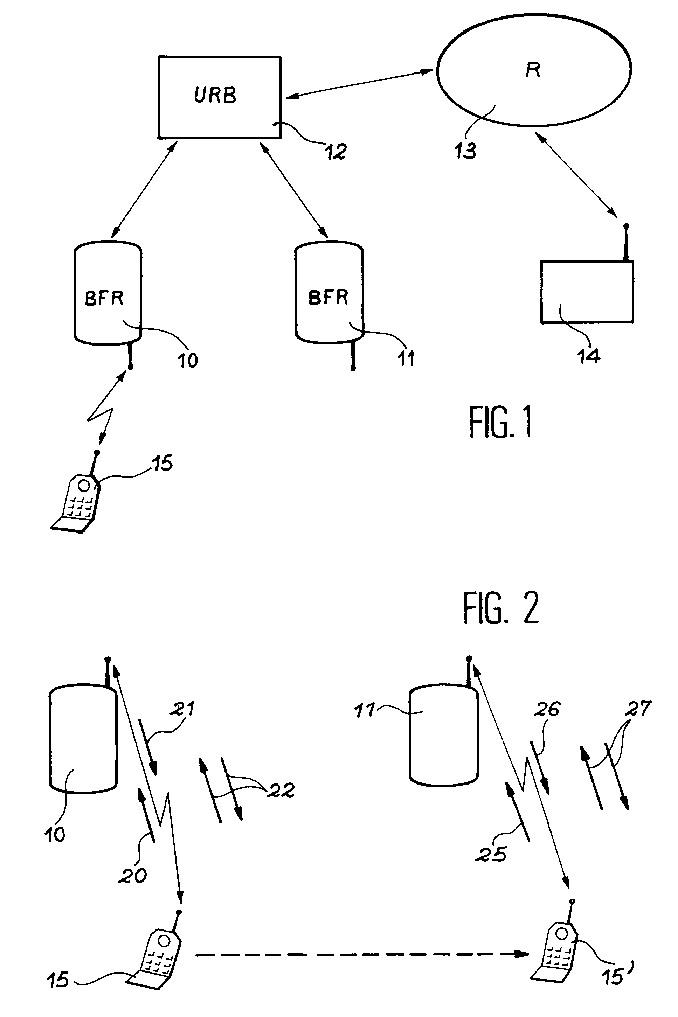

La figure 1 illustre un système de radiocommunication avec des terminaux mobiles, par exemple des combinés 15. Sur cette figure deux bornes publiques ou privées 10 et 11 sont reliées à une unité de raccordement 12, reliée elle-même au réseau téléphonique RTCP 13. De même une borne domestique 14 est reliée à ce réseau. Un combiné 15, ici en communication avec la borne 10, est également représenté. A la place de l'unité 12, on peut également avoir un autocommutateur de type PABX.

Selon la norme CAI-CT2, lors de l'établissement d'une communication, une borne attribue à un combiné un LID dans la plage publique. Une fois la communication établie, la borne attribue à ce combiné un LID dans la plage privée. Une borne ne peut donc faire la distinction entre :

- le début d'un ré-établissement ;
- le début d'un "handover".

Les bornes refusent alors de communiquer, car elles n'acceptent pas un établissement avec un LID dans la plage privée.

Un "handover" nécessite, en effet, non seulement un transfert de communication niveau radio, mais également une réorientation de la voie de phonie (transmission entre borne et réseau téléphonique) niveau réseau. Une borne sous laquelle un "handover" a lieu doit donc être capable de reconnaître qu'il s'agit effectivement d'une demande de "handover" afin d'en avertir le réseau et de pouvoir commuter la phonie le plus rapidement possible.

La norme CAI-CT2 ne spécifie pas littéralement de mécanisme de "handover". Un "handover" peut néanmoins être considéré comme un ré-établissement sur une borne différente de la borne d'appel. La difficulté réside dans la distinction à effectuer entre le début d'un ré-établissement et le début de "handover". La borne sous laquelle l'appel initial a eu lieu connaît le PID et le LID attributs de la communication en cours. Le "handover" peut donc être vu comme un ré-établissement sur une borne ne connaissant pas le PID et le LID de la communication en cours jusqu'à l'envoi du LINK_REQUEST du combiné. Un problème surgit alors, notamment avec les bases privées domestiques pour lesquelles l'établissement d'appel et le ré-établissement niveau 2 répondent à ce critère.

Pour discriminer les bornes supportant le "handover" dans un réseau donné des autres bornes, une solution envisageable consiste à fournir à l'ensemble des bornes voisines de la borne d'établissement d'appel le LID et le PID de la communication en cours afin que la passage sous une de ces bornes puisse être perçu comme un simple ré-établissement par ces dernières. Un tel procédé a néanmoins l'inconvénient de nécessiter la gestion de bornes voisines et donc de définir quelles sont les bornes voisines (cartographie géographique). Une borne voisine connaissant l'identité du combiné peut alors distinguer le début d'un "handover" et le début d'un ré-établissement. Mais une telle procédure est lourde à gérer sur un parc important de bornes tant au niveau des difficultés que cela pose en terme de mise à jour des informations du parc, que de la gestion de signalisation à associer à un tel principe. Un tel fonctionnement est toutefois envisageable avec un PABX qui gère une structure limitée.

L'invention permet de pallier cet inconvénient.

Pour la suite de la description, la première borne est la borne sous laquelle a eu lieu l'établissement initial ; la seconde borne, la borne sous laquelle le "handover" va avoir lieu. L'invention consiste à implanter un dispositif commun au niveau de l'ensemble des bornes supportant le "handover", l'information d'une communication établie sous une borne supportant le "handover" étant véhiculée par le combiné.

Comme représenté sur la figure 2, dans une opération de "handover" on a tout d'abord une liaison radio entre un combiné 15 et une première borne 10 :

- le combiné envoie un LINK_REQUEST (PID, BID) vers la borne (phase 20) ;
- la première borne 10 calcule alors le BID ;
- elle envoie un LINK_GRANT (PID, BID) vers le combiné (phase 21) ;
- il y a alors échange d'informations entre le combiné 15 et la première borne 10 (phase 22).

Si le combiné 15 passe alors dans une nouvelle position 15', les messages émis par la première borne 10 ne sont plus reçus par le combiné 15:

- le combiné 15 envoie un LINK_REQUEST (PID, BID) qui est reçu par une seconde borne 11 (phase 25) ;
- la seconde borne 11 analyse la valeur de BID, elle voit si la valeur du BID est adéquate et s'il s'agit d'un "handover"; dans un tel cas elle envoie alors un LINK GRANT (PID, BID) (phase 26) ;
- il y a alors échange d'informations entre le combiné 15 et la seconde borne 11 (phase 27).

L'invention permet donc à la seconde borne 11 de savoir si un combiné la sollicite ou non pour un "handover" (et donc de poursuivre la communication en cours), en s'affranchissant de toute considération géographique concernant les bornes. Elle permet à une borne du système considéré d'autoriser une demande de "handover" de la part d'un combiné, sans avoir d'information préalable provenant du réseau sur l'identité de ce combiné, et donc de différencier une demande de "handover" d'un appel sortant émanant d'une borne domestique.

En début d'appel, le combiné envoie donc un message LINK_REQUEST (LID, PID) vers une première borne avec un LID qui est une valeur située dans la plage publique, et un PID qui est un numéro de série du combiné (unique).

Cette première borne envoie alors un message LINK_GRANT (LID, PID) avec un LID qui est une valeur située dans la plage privée.

Ensuite, en permanence, entre cette première borne et le combiné il y a alors "handshake" (toutes les 400 ms).

Lorsque le combiné s'éloigne de cette première borne et se rapproche d'une seconde borne, la liaison avec la première borne va devenir mauvaise et cette première borne ne va plus recevoir l'information envoyée par le combiné.

Au bout d'une temporisation de trois secondes, le combiné va alors tenter un rétablissement de liaison en envoyant un LINK_REQUEST (LID, PID), avec un LID ayant une valeur située dans la plage privée (et non plus dans la plage publique), vers la borne.

Jusqu'à présent, la valeur de LID attribuée alors était n'importe laquelle dans la gamme 0401-OFFF.

L'invention consiste à choisir une valeur particulière prédéfinie dépendant du combiné. On parle alors de "moulinette" : $m = f(PID, clé)$ par exemple les deux derniers octets du PID, la clé étant propre à l'opérateur pour changer l'algorithme.

Ainsi on a successivement les différentes phases suivantes :

- la première borne établit une communication avec le combiné d'identité PID. La référence du lien radio envoyé à ce combiné est déterminée à partir du calcul :

    $BID1 = f(PID, K)$ où $LID1 \in [0401, FFFE]$

    f est une "moulinette" du logiciel borne
    K est une clé de 16 bits (taille du BID) changée pour l'ensemble du réseau de bornes n fois par jour ($n$ entier $\geq 2$) ;

- le combiné se déplace et tente de se rétablir sur la seconde borne en envoyant un LINK_REQUEST véhiculant PID plus LID1.

Ainsi dans LINK_REQUEST (BID, PID) BID est calculé par la "moulinette" lors de l'établissement d'appel sur la première borne. La "moulinette" est la même dans chaque borne, de même toutes les bornes possèdent la même clé.

- la deuxième borne reçoit alors ce LINK_REQUEST. Si le BID a une valeur située dans la plage privée, il s'agit soit d'un "handover", soit d'un appel départ combiné domestique. Elle calcule donc à l'aide du PID reçu: $LID2 = f(PID, K)$ ; si $(LID1 = LID2)$ ; alors, c'est un "handover". La seconde borne envoie un LINK GRANT sur le lien radio et demande une commutation sur la voie de phonie; sinon, c'est un début d'appel privé : la seconde borne ne renvoie pas le LINK-GRANT.

Dans une variante de réalisation, on peut utiliser en parallèle le mécanisme de l'art connu décrit plus haut, consistant à transmettre l'identité du combiné à toutes les bornes voisines de la première borne avec laquelle ledit combiné est en commutation.

Ainsi si un "handover" est accepté par une borne, qui n'avait pas été déclarée voisine de la première borne, il peut alors y avoir correction et remise à jour de la liste desdites bornes voisines.

Un problème de communication peut également se poser : lors de l'établissement d'un appel, un LINK_REQUEST peut être envoyé par un combiné vers deux bornes en train d'écouter. Celles-ci peuvent alors envoyer un LINK_GRANT en même temps, et le combiné être en liaison avec ces deux bornes et ne pas s'en apercevoir.

Pour pallier ce défaut on utilise un BID constitué de deux parties :

- une première partie (un ou plusieurs bits) : déterminée par la borne de manière aléatoire ou de manière fixe ;
- une seconde partie (bits restants) : "moulinette".

Le combiné peut alors choisir une borne sans risque d'erreur.

GLOSSAIRE

CAI :       "Common Air Interface"

URB :       Unité de raccordement de bornes

BFR :       Borne fixe radio

Télépoint :       Réseau micro cellulaire radio mobile à vocation urbaine

CT2 :       "Cordless Telephone of 2nd Generation" ou téléphone sans fil de second génération

PID :       "Portable (CPP) Identification Code" ou code d'identification de portable

LID :       "Link Identification Code" ou code d'identité de borne

BID :       "Base Identity Code" ou code d'identité de borne

LINK_REQUEST :       "Link Status Request to Seize Link" ou demande de lien

LINK_GRANT :       "CFP Acknowledgement Assigning Call Reference ID" ou acceptation de lien

CFP :       "Cordless Fixed Part" ou borne

CPP :       "Cordless Portable Part" ou combiné portable

Tflnor :       Temps pendant lequel la borne doit attendre pour recevoir des mots de code LINK_REQUEST acceptables dans le ré-établissement de lien sur le même canal

Tptxlr :       Période pendant laquelle le combiné doit émettre les mots de code LINK_REQUEST dans un multiplexeur de signalisation de mode 3 sur un canal donné pendant le ré-établissement de lien sur le même canal (pas inférieur à 1.6s)

MUX 3 :       Multiplexeur de signalisation de mode 3

**Revendications**

1. Procédé de communication dans un système de radiocommunication avec des terminaux mobiles en liaison avec au moins une borne fixe, utilisant la norme d'interface radio CAI-CT2, caractérisé en ce que, lors de l'établissement d'une communication entre une borne fixe (10) et un terminal mobile (15), la borne fixe (10) fournit au terminal mobile (15) une référence de lien radio qui est fonction de l'identité du dudit terminal mobile (15).

2. Procédé selon la revendication 1, caractérisé en ce que la référence de lien radio est fonction de l'identité du combiné et d'une clé de calcul paramétrable.

3. Procédé selon la revendication 2, caractérisé en ce que la référence au lien radio envoyé au terminal mobile d'identité PID est déterminée à partir du calcul $BID = f(PID, K)$ où $LID \in [0401, FFFE]$, et en ce que f, qui est une fonction du logiciel borne, et K, qui est une clé de 16 bits (taille de BID), sont respectivement les mêmes dans chaque borne.

4. Procédé selon la revendication 2, caractérisé en ce que la clé est chargée pour l'ensemble du réseau de bornes n fois par jours ; avec n entier ≥ 2.

5. Procédé selon la revendication 1, caractérisé en ce que l'on fournit à l'ensemble des bornes voisines de la borne d'établissement d'appel le LID et le PID, attributs de la communication en cours.

6. Procédé selon la revendication 1, caractérisé en ce qu'on utilise plusieurs clés différentes de manière à autoriser le "handover" de manière exclusive dans une zone donnée.

7. Procédé selon la revendication 1, caractérisé en ce que le mot BID est constitué de deux parties: une première partie sur un ou plusieurs bits déterminé par la borne, de manière aléatoire ou de manière fixe, et une seconde partie sur les bits restants qui constitue la fonction f.

FIG. 1

FIG. 2

EP 0 729 283 A1

| Office européen des brevets | **RAPPORT DE RECHERCHE EUROPEENNE** | Numero de la demande EP 96 40 0341 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 569 645 (DASSAULT AUTOMATISMES ET TELEC) 18 Novembre 1993<br>* colonne 13, ligne 12 - colonne 15, ligne 49 * | 1 | H04Q7/24 |
| A | EP-A-0 390 333 (PLESSEY TELECOMM) 3 Octobre 1990<br>* page 6, ligne 14 - page 7, ligne 9 *<br>* page 11, ligne 47 - page 13, ligne 42 * | 1 | |

DOMAINES TECHNIQUES RECHERCHES (Int.Cl.6)

H04Q
H04M

**Le présent rapport a été établi pour toutes les revendications**

| Lieu de la recherche | Date d'achèvement de la recherche | Examinateur |
|---|---|---|
| LA HAYE | 29 Mai 1996 | Janyszek, J-M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

8